# EUROPEAN PATENT SPECIFICATION

(11) **EP 3 354 519 B1**
(45) Date of publication and mention of the grant of the patent: **24.07.2019**
(21) Application number: 17002019.2
(22) Date of filing: 12.12.2017
(51) Int. Cl.: B60R 9/06

(54) **DEVICE FOR TRANSPORTING A LOAD ON MOTOR VEHICLES**
VORRICHTUNG ZUM TRANSPORTIEREN EINER LAST AUF KRAFTFAHRZEUGEN
DISPOSITIF POUR TRANSPORTER UN CHARGEMENT SUR DES VÉHICULES À MOTEUR

(30) Priority: 26.01.2017 IT 201700008142
(43) Date of publication of application: 01.08.2018
(73) Proprietor: Aurilis Group Italia S.R.L., 12045 Fossano (CN) (IT)
(72) Inventor: Gemesio, Matteo, 12045 Fossano (CN) (IT)
(74) Representative: Garavelli, Paolo

(56) References cited:
- EP-A1- 1 700 745

## Description

The present invention refers to a device for transporting a load on motor vehicles, for example for transporting bicycles, skis or a containing box. In particular, the invention refers to a device adapted to be assembled projecting on the rear part of a motor vehicle, fastened to a towing hook connected to the motor vehicle.

Device are known for transporting a load on motor vehicles, which can be connected projecting to a towing hook, in particular adapted to be assembled on the rear part of a motor car.

These devices however are not satisfactory and have the problem of not allowing the opening of the rear hatch when the load is fastened onto the device, if used with vehicles having big-sized doors.

Some known devices for transporting a load on motor vehicles, connectable projecting to a towing hook, solve this problem due to a mobile frame which is assembled sliding on a fixed frame adapted to be connected to the towing hook.

This mobile frame is adapted to be moved away from the vehicle hatch, sliding on the fixed frame in order to move away from the vehicle the load assembled on the chassis, allowing to open the hatch.

EP1700745 discloses a device for transporting a load, in particular bicycles, connectable projecting to a towing hook of a motor vehicle, comprising a fixed frame connectable to the towing hook and to a mobile transporting device assembled sliding and slanting with respect to the fixed frame; the mobile transporting device is made in order to slide on a sliding guide from a first final position near the towing hook to a second final position far from the towing hook, and is adapted to be inclined downwards when it is in its second position.

The sliding guide is made so that the mobile transporting device, following the release of a stopper device, is adapted to freely move and is forced to move between the two final positions.

These known devices have the following problems: a first problem is caused by the fact that, if a wrong locking of the stopper device occurs, the mobile transporting device could move away during the motion of the motor car, generating safety problems.

A second problem of these devices is that, being the mobile transporting device forced to move between the first final position near the towing hook and the second final position far from the towing hook, when the hatch has to be opened, it is necessary to completely move the mobile transporting device making it arrive in its second final position far from the towing hook, in which the device is overturned, even when the device is installed on motor cars with hatches which could be opened with a partial movement of the mobile transporting device.

A third problem can occur when the motor car is parked on a rise (which is comment when using mountain bikes): once having unlocked the sliding from the starting position, the load could accidentally slide outwards till it overturns.

The fact that the load overturns can cause both a safety problem for a user, and a practicality problem since the operation to upwards re-oscillate the load requires much more efforts with respect to those required by the only translation necessary for closing.

Object of the present invention is solving the above prior art problems, by providing a device for transporting a load on motor vehicles, connectable projecting to a towing hook and adapted to be assembled on the rear part of a motor car which prevents its complete opening when moving away the mobile frame; it further allows a partial away movement of the device in one or more intermediate positions in which the outwards sliding is automatically blocked. This at least one or this plurality of intermediate positions is/are therefore and one does not run the risk of a load accidentally reaching its overturning point.

The above and other objects and advantages of the invention, as will result from the following description, are obtained with a device for transporting a load on motor vehicles as claimed in claim 1. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, without departing from the scope of the invention as appears from the enclosed claims.

The present invention will be better described by some preferred embodiments thereof, provided as a non-limiting example, with reference to the enclosed drawings, in which:

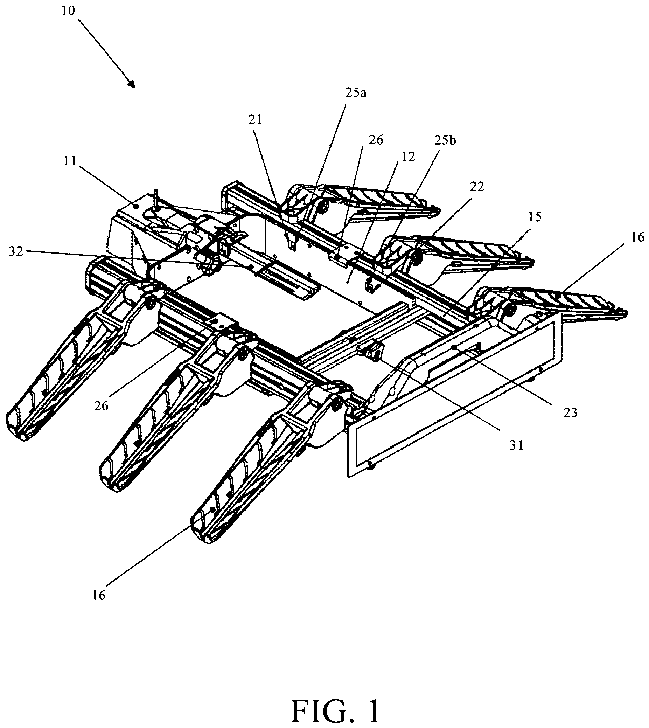

- Figure 1 shows a view of an embodiment of the device for transporting a load on motor vehicles according to the present invention;

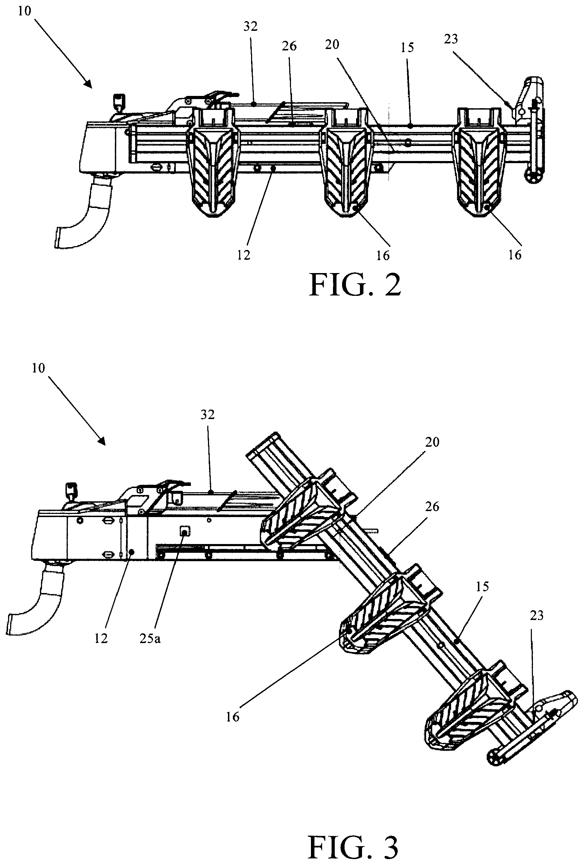

- Figure 2 shows a side view of an embodiment of the device for transporting a load on motor vehicles according to the present invention in its closed configuration;
- Figure 3 shows a side view of an embodiment of the device for transporting a load on motor vehicles according to the present invention in its open configuration;
- Figure 4 shows a part of an embodiment of the device for transporting a load on motor vehicles according to the present invention;
- Figures 5a and 5b show side views of a part of an embodiment of the device for transporting a load on motor vehicles according to the present invention in two different configurations; and

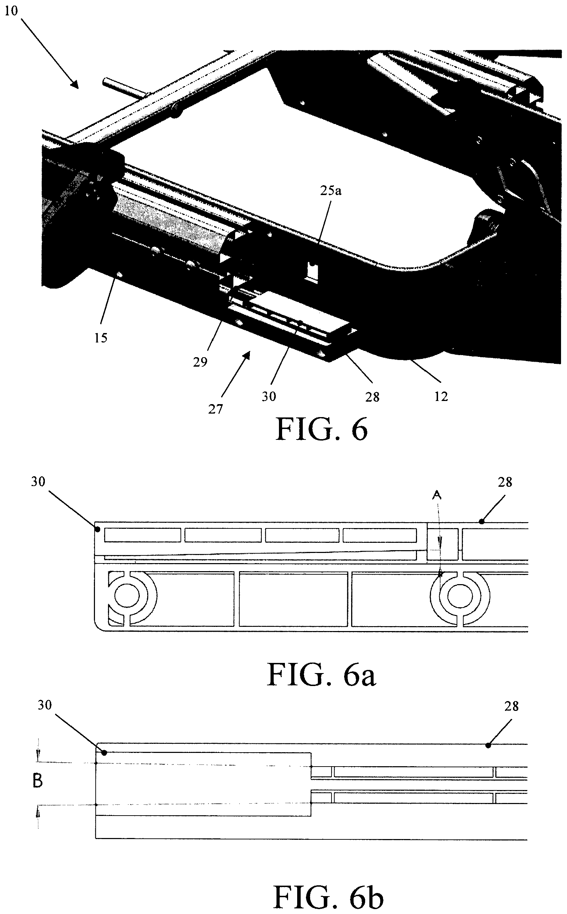

- Figures 6, 6a and 6b show views of a part of an embodiment of the device for transporting a load on motor vehicles according to the present invention.

With reference to the Figures, the device 10 for transporting a load on motor vehicles of the invention comprises a connection element 11 to a towing hook installed on a motor vehicle, a fixed frame 12 connected to the connection element 11, a mobile frame 15 assembled sliding on the fixed frame 12 and preferably fastening devices 16 connected to the mobile frame 15 on which the load is adapted to be fastened.

Preferably, the fastening devices 16 comprise load supports, for example wheel supports comprising a small channel adapted to contain the wheel of a bicycle and connected to the mobile frame 15, hinged and/or connected sliding by means of guides to the mobile frame 15 in order to be adjustable to be suited to different types of load.

In the embodiment of the device 10 adapted to transport bicycles, the fastening devices 16 preferably comprise straps to block the bicycle wheel onto the small channel, and the position of the wheel supports is adjustable to adapt the wheelbase of the wheel supports depending on the sizes (width) of the loaded bicycles. For example, Downhill bikes have widths of chassis, handlebar, forks and carriages which are much greater than those of running bikes.

The device 10 for transporting a load on motor vehicles of the invention further comprises first locking elements 21 associated with the fixed frame 12 and with the mobile frame 15 and adapted to block the translation of the mobile frame 15 with respect to the fixed frame 12 in a position next to the towing hook, and second locking elements 22 associated with the fixed frame 12 and with the mobile frame 15 and adapted to block the translation of the mobile frame 15 with respect to the fixed frame 12 in at least one intermediate position, or in a plurality of intermediate positions between the position next to the towing hook, in which the first locking elements 21 block the translation of the mobile frame 15 with respect to the fixed frame 12, and a final position, in which the mobile frame 15 is moved away from the towing hook till arriving at the maximum stroke of the mobile frame 15.

The mobile frame 15 is adapted to slide on the fixed frame 12 between the position next to the towing hook, in cui it is blocked by the first locking elements 21, and the intermediate position/s, in which it is blocked by the second locking elements 22, while is adapted to be inclined rotating around an oscillation axis 20 transverse, preferably perpendicular, to the sliding direction of the mobile frame 15 on the fixed frame 12 when it has passed the intermediate position and slides till the final position, in which the mobile frame 15 is moved away from the towing hook.

Preferably, the device 10 for transporting a load on motor vehicles of the invention further comprises an unlocking device 23, connected to the first locking elements 21 and to the second locking elements 22 and adapted to unlock them to free the mobile frame 15 allowing it to slide on the fixed frame 12.

In a preferred way, the first locking elements 21 and the second locking elements 22 are adapted to prevent the translation of the mobile frame 15 outwards, moving from the position next to the towing hook towards the intermediate position, or from the intermediate position to the final position, and are adapted to let free the translation towards the towing hook, in particular from the final position towards the intermediate position, or from the intermediate position towards the position next to the towing hook.

Preferably, the first locking elements 21 and the second locking elements 22 are each composed of a tooth 24 and of a first seat 25a and of a second seat 25b obtained in the fixed frame 12; the tooth 24 is hinged inside the mobile frame 15 and is adapted to be engaged in the seats 25a, 25b, blocking the movement of the mobile frame 15; an elastic element, for example a torsion spring, is associated with the tooth 24 and is adapted to push it outwards inserting it in the seats 25a, 25b; alternatively, a plurality of seats can be obtained, to block the translation of the mobile frame 15 in a plurality of positions.

In a preferred way, the tooth 24 is shaped as a wedge, and is then adapted to prevent the translation of the mobile frame 15 outwards, while its translation towards the towing hook is free.

Preferably, the unlocking device 23 is a lever 23 with manual actuation placed on the rear part of the device 10 for transporting a load, opposite to the towing hook, and is connected to the free end of the tooth 24 by means of a cable; when the cable is put under traction by means of the lever 23, there is the rotation of the tooth 24 towards the internal part of the mobile frame 15, freeing the seat 25a, 25b and allowing the movement of the mobile frame 15 outwards, moving it away from the towing hook.

In a preferred way, the device 10 for transporting a load of the invention further comprises means for blocking 26 the rotation, composed for example of a bracket 26 fastened to the mobile frame 15 and projecting therefrom in order to be overlapped to the fixed frame 12 and prevent the oscillation or the rotation of the mobile frame 15, when this latter one is between the intermediate position and the position next to the towing hook.

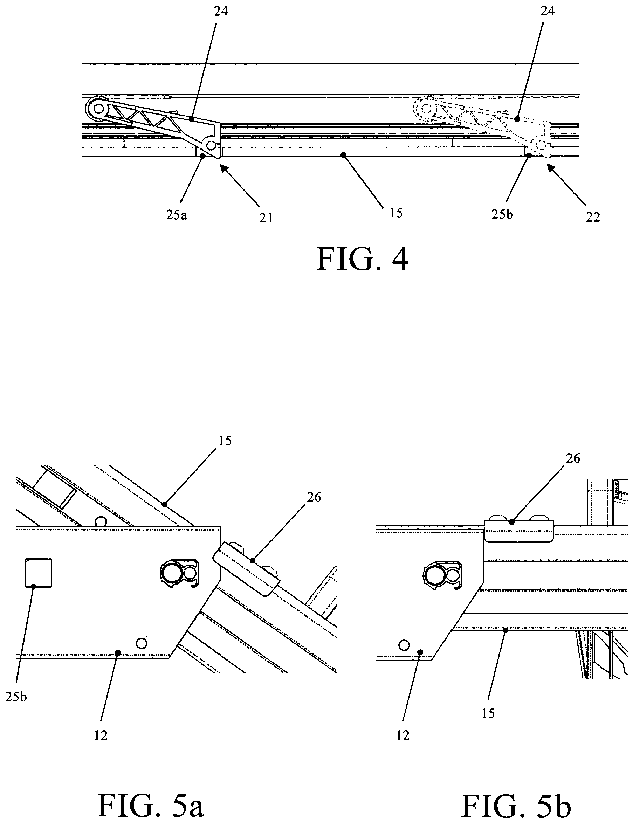

The oscillation of the mobile frame 15 around the oscillation axis 20 is instead possible when the mobile frame 15 is moved with respect to the fixed frame 12 so that the means for blocking 26 are over the end of the fixed frame 12, as shown in Figures 5a and 5b, and is not between the intermediate position and the final position in which the mobile frame 15 is moved away from the towing hook.

The means for blocking 26 the rotation, or the bracket 26, are further adapted to prevent the translation of the mobile frame 15 inwards, and namely towards the towing hook when the mobile frame 15 is inclined; the user cannot translate the mobile frame 15 inwards in an inclined position over a given amount, and will be compelled to bring it back to a horizontal position and solo at that time he will be able to translate it (close it) in the running position, with the mobile frame 15 in the position next to the towing hook.

Preferably, the mobile frame 15 is assembled sliding with respect to the fixed frame 12 on guiding means 27, composed of a sliding guide 28 fastened to the external side of the fixed frame 12 and of a groove 29 obtain on a tubular element of the mobile frame 15. The guiding means 27 are adapted to keep the mobile frame 15 in a horizontal position and to prevent its overturning in the first part of its outward translation motion, when it moves away from the towing hook. To obtain this, the groove 29 gets to be engaged on a "T"-shaped end 30 of the sliding guide 28. Moreover, the guiding means 27 are adapted to remove the clearances between fixed frame 12 and mobile frame 15. To do so, the "T"-shaped end 30 of the sliding guide 28 is equipped with double taper, namely it has a first angle A and a second angle B which reduce to a minimum the clearances on the tubular element of the mobile frame 15 when this latter one reaches the last part of its closing stroke.

Preferably, the device 10 for transporting a load of the invention further comprises a locking knob 31, adapted to block the mobile frame 15 with the fixed frame 12 when the device is in its running position, which corresponds to the position next to the towing hook; for example, the locking knob 31 comprises a threaded screw which can be screwed inside seats obtained on the mobile frame 15 and on the fixed frame 12.

Optionally, the device 10 for transporting a load of the invention can comprise a closing lever 32 of the device 10 on the towing hook, connected, preferably in an extractable way adapted to be disassembled, to the connection element 11 to the towing hook.

The operation of the device 10 for transporting a load on motor vehicles according to the present invention will now be described.

When the device 10 for transporting a load of the invention is in its position in which the vehicle can travel, the mobile frame 15 is completely translated towards the vehicle in the position next to the towing hook, blocked by the first locking elements 21, for example by the tooth 24 engaged in the first seat 25a, so that the translation of the mobile frame 15 is blocked, and its oscillation is prevented by the means for blocking 26 the rotation, composed for example of the bracket 26, and of the guiding means 27, composed for example of the sliding guide 28 having the "T"-shaped end 30.

Optionally, a further safety can be provided by the locking knob 31, which must be closed before running the vehicle. If the mobile frame 15 is not correctly translated in the running position next to the towing hook, the locking knob 31 cannot be correctly actuated (will idly turn) ; in this way, the user will be able to notice the problem and to correctly block the device 10 before running the vehicle.

To be able to move the mobile frame 15, the safety knob 31, when present, must necessarily be unlocked, for example unscrewed.

By actuating the unlocking device 23, composed for example of the lever 23 with manual operation, the mobile frame 15 is freed, which can then be outward translated.

When the unlocking device 23 is released, the mobile frame 15 stops in the following intermediate position, in which it is again blocked by the second locking elements 22, composed for example of the tooth 24 engaged in the second seat 25b. Optionally, the mobile frame 15 can stop in one of the following positions, possibly provided. When the mobile frame is unmoving, blocked by one of the blocking elements 21, 22, next to a seat 25a, 25b, the outward translation is allowed only following the actuation of the unlocking device 23, while the inward translation (towards the vehicle or towards the towing hook) is always free.

If the mobile frame 15 is translated outwards over the last blocking point, towards the final position, it will be free of oscillating and of further translating by a small distance till it reaches its final position.

Advantageously, the device 10 for transporting a load on motor vehicles of the invention, due to the second locking elements 22, associated with the fixed frame 12 and with the mobile frame 15, which block the translation of the mobile frame 15 with respect to the fixed frame 12 in the intermediate position, and prevent the mobile frame from moving outwards and therefore is in a rotated position during the motion of the motor car, if there is a wrong locking of the first locking elements 21, avoids safety problems.

Another advantage brought about by the second locking elements 22 is allowing to open the hatch of the motor vehicle, in case of hatches with a limited height, even with a partial movement of the mobile frame 15 till the intermediate position, without requiring the complete movement till the final position far from the towing hook.

Advantageously, the embodiment of the device 10 for transporting a load of the invention which comprises the closing lever 32 on the towing hook which can be extracted and disassembled, avoids encumbrances when fastening the load and is a further anti-theft system, because when the closing lever 32 is disassembled, it is very difficult to force the opening of the device 10.

## Claims

1. Device (10) for transporting a load on motor vehicles comprising:
- a connection element (11) connectable to a towing hook installed on a motor vehicle,
- a fixed frame (12) connected to the connection element (11),
- a mobile frame (15), assembled sliding on the fixed frame (12), on which the load is adapted to be fastened;
- first locking elements (21) associated with the fixed frame (12) and with the mobile frame (15) and adapted to block the translation of the mobile frame (15) with respect to the fixed frame (12) in a position next to the towing hook, **characterized in that** there are provided
- second locking elements (22) associated with the fixed frame (12) and with the mobile frame (15) and adapted to block the translation of the mobile frame (15) with respect to the fixed frame (12) in at least one intermediate position between the position next to the towing hook, in which the first locking elements (21) block the translation of the mobile frame (15) with respect to the fixed frame (12), and a final position, in which the mobile frame (15) is moved away from the towing hook, said mobile frame (15) being adapted to slide on the fixed frame (12) between the position next to the towing hook and the at least one intermediate position, and being adapted to be inclined rotating around an oscillation axis (20) transverse to the sliding direction of the mobile frame (15) on the fixed frame (12) after having passed the at least one intermediate position,
whereby locking elements (21) and the second locking elements (22) are adapted to prevent the translation of the mobile frame (15) outwards, moving from the position next to the towing hook towards the at least one intermediate position, or from the last intermediate position to the final position, and are adapted to let free the translation towards the towing hook, in particular from the final position towards the last intermediate position, or from the first intermediate position towards the position next to the towing hook, the first locking elements (21) and the second locking elements (22) being each composed of a tooth (24) and of a first seat (25a) or of a second seat (25b) obtained in the fixed frame (12), said tooth (24) being hinged inside the mobile frame (15) and adapted to be engaged in the seats (25a, 25b) blocking the movement of the mobile frame (15).

2. Device (10) for transporting a load on motor vehicles according to claim 1, **characterized in that** the second locking elements (22) are adapted to block the translation of the mobile frame (15) with respect to the fixed frame (12) in a plurality of intermediate positions between the position next to the towing hook, in which the first locking elements (21) block the translation of the mobile frame (15) with respect to the fixed frame (12), and the final position, in which the mobile frame (15) is moved away from the towing hook, said mobile frame (15) being adapted to slide on the fixed frame (12) between the position next to the towing hook and the intermediate positions, and being adapted to be inclined rotating around an oscillation axis (20) transverse to the sliding direction of the mobile frame (15) on the fixed frame (12) after having passed the last intermediate position which precedes the final position.

3. Device (10) for transporting a load on motor vehicles according to claim 1 or 2, **characterized in that** it further comprises an unlocking device (23) connected to the first locking elements (21) and to the second locking elements (22) and adapted to unlock them to free the mobile frame (15) allowing it to slide on the fixed frame (12).

4. Device (10) for transporting a load on motor vehicles according to claim 1, **characterized in that** the tooth (24) is shaped as a wedge and is adapted to prevent the translation of the mobile frame (15) outwards, while its translation towards the towing hook is free.

5. Device (10) for transporting a load on motor vehicles according to any one of the previous claims, **characterized in that** the unlocking device (23) is a lever with manual actuation placed on the rear part of the device (10) for transporting a load which is opposite to the towing hook, and is connected to the free end of the tooth (24) by means of a cable adapted to rotate the tooth (24) towards the internal part of the mobile frame (15), freeing the seat (25a, 25b) and allowing the movement of the mobile frame (15) outwards, moving it away from the towing hook.

6. Device (10) for transporting a load on motor vehicles according to any one of the previous claims, **characterized in that** it further comprises means for blocking (26) the rotation adapted to prevent the oscillation or the rotation of the mobile frame (15) when it is between the intermediate position and the position next to the towing hook, and adapted to prevent the translation of the mobile frame (15) inwards, and namely towards the towing hook when the mobile frame (15) is inclined.

7. Device (10) for transporting a load on motor vehicles according to claim 6, **characterized in that** the means for blocking (26) the rotation are composed of a bracket (26) fastened to the mobile frame (15) and projecting therefrom in order to be overlapped to the fixed frame (12).

8. Device (10) for transporting a load on motor vehicles according to any one of the previous claims, **characterized in that** the mobile frame (15) is assembled sliding with respect to the fixed frame (12) on guiding means (27) composed of a sliding guide (28) fastened to the side of the fixed frame (12) and of a groove (29) obtained on the mobile frame (15), the guiding means (27) being adapted to keep the mobile frame (15) in a horizontal position and to prevent its overturning in the first part of its translation motion outwards, when it moves away from the towing hook.

9. Device (10) for transporting a load on motor vehicles according to claim 8, **characterized in that** the guiding means (27) comprise an end (30) of the sliding guide (28) equipped with double taper which has a first angle (A) and a second angle (B) which reduce to a minimum the clearances of the mobile frame (15) when this latter one reaches the last part of its closing stroke.

10. Device (10) for transporting a load on motor vehicles according to any one of the previous claims, **characterized in that** it further comprises a locking knob (31) adapted to block the mobile frame (15) with the fixed frame (12) when the device is in its running position which corresponds to the position next to the towing hook.

11. Device (10) for transporting a load on motor vehicles according to any one of the previous claims, **characterized in that** it comprises a closing lever (32) of the device (10) on the towing hook, connected in an extractable way adapted to be disassembled to the connection element (11) to the towing hook.

12. Device (10) for transporting a load on motor vehicles according to any one of the previous claims, **characterized in that** it comprises fastening devices (16) comprising load supports hinged and/or connected sliding by means of guides to the mobile frame (15) in order to be adjustable to be suited to different types of load.

## Patentansprüche

1. Vorrichtung (10) für den Transport einer Last auf Fahrzeugen, die Folgendes enthält:
- ein Verbindungselement (11), das mit einer Anhängerkupplung verbunden werden kann, die auf einem Fahrzeug installiert ist,
- einen festen Rahmen (12), der mit dem Verbindungselement (11) verbunden ist,
- einen beweglichen Rahmen (15), der gleitend auf einem festen Rahmen (12) montiert wird, auf dem er dazu dient, an der Last befestigt zu werden;
- erste Blockierelemente (21), die mit dem festen Rahmen (12) und dem beweglichen Rahmen (15) verbunden werden und dazu dienen, die Verschiebung des beweglichen Rahmens (15) gegenüber dem festen Rahmen (12) in einer Position an der Anhängerkupplung zu blockieren,
die **dadurch gekennzeichnet ist, dass**
- zweite Blockierelemente (22) vorgesehen sind, die mit dem festen Rahmen (12) und dem beweglichen Rahmen (15) verbunden sind und dazu dienen, die Verschiebung des beweglichen Rahmens (15) gegenüber dem festen Rahmen (12) in mindestens einer Zwischenposition zwischen der Position an der Anhängerkupplung, in der die ersten Blockierelemente (21) die Verschiebung des beweglichen Rahmens (15) gegenüber dem festen Rahmen (12) blockieren, und einer abschließenden Position zu blockieren, in der der bewegliche Rahmen (15) von der Anhängerkupplung entfernt wird, der genannte bewegliche Rahmen (15) dient dazu, auf dem festen Rahmen (12) zwischen der Position an der Anhängerkupplung und der mindestens einen Zwischenposition zu gleiten, und dazu, sich zu neigen, indem er sich um eine Schwenkachse (20) dreht, die transversal zur Gleitrichtung des beweglichen Rahmens (15) am festen Rahmen (12) liegt, nachdem er mindestens eine Zwischenposition überschritten hat, daher dienen die ersten Blockierelemente (21) und die zweiten
Blockierelemente (22) dazu, die Verschiebung des beweglichen Rahmens (15) nach außen zu verhindern, indem sie sich von der Position an der Anhängerkupplung in Richtung von mindestens einer Zwischenposition oder von der letzten Zwischenposition zur abschließenden Position bewegen, und sie dienen dazu, die Verschiebung in Richtung der Anhängerkupplung freizulassen, insbesondere von der abschließenden Position zur letzten Zwischenposition, oder von der ersten Zwischenposition zur Position an der Anhängerkupplung, die ersten Blockierelemente (21) und die zweiten Blockierelemente (22) bestehen jeweils aus einem Zahn (24) und aus einer ersten Aufnahme (25a) oder aus einer zweiten Aufnahme (25b), die im festen Rahmen (12) hergestellt wurden, der genannte Zahn (24) ist intern im beweglichen Rahmen (15) scharniert und dient dazu, sich in den Aufnahmen (25a, 25b) zu spannen und die Verschiebung des beweglichen Rahmens (15) zu blockieren.

2. Vorrichtung (10) für den Transport einer Last auf Fahrzeugen gemäß Patentanspruch 1, die **dadurch gekennzeichnet ist, dass** die zweiten Blockierelemente (22) dazu dienen, die Verschiebung des beweglichen Rahmens (15) gegenüber dem festen Rahmen (12) in mehreren Zwischenpositionen zwischen der Position an der Anhängerkupplung zu blockieren, in der die ersten Blockierelemente (21) die Verschiebung des beweglichen Rahmens (15) gegenüber dem festen Rahmen (12) und der abschließenden Position blockieren, in der der bewegliche Rahmen (15) von der Anhängerkupplung entfernt wird, der genannte bewegliche Rahmen (15) dient dazu, auf dem festen Rahmen (12) zwischen der Position an der Anhängerkupplung und den Zwischenpositionen zu gleiten, und dazu, sich zu neigen, indem er sich um eine Schwenkachse (20) dreht, die transversal zur Gleitrichtung des beweglichen Rahmens (15) am festen Rahmen (12) liegt, nachdem er die letzte Zwischenposition überschritten hat, die der abschließenden Position vorangeht.

3. Vorrichtung (10) für den Transport einer Last auf Fahrzeugen gemäß Patentanspruch 1 oder 2, die **dadurch gekennzeichnet ist, dass** sie außerdem eine Entriegelungsvorrichtung (23) enthält, die mit den ersten Blockierelementen (21) und mit den zweiten Blockierelementen (22) verbunden ist und dazu dient, diese zu entriegeln, um den beweglichen Rahmen (15) zu befreien und ihm zu ermöglichen, auf dem festen Rahmen (12) zu gleiten.

4. Vorrichtung (10) für den Transport einer Last auf Fahrzeugen gemäß Patentanspruch 1, die **dadurch gekennzeichnet ist, dass** der Zahn (24) eine Keilform hat und dazu dient, die Verschiebung des beweglichen Rahmens (15) nach außen zu verhindern, während seine Verschiebung in Richtung der Anhängerkupplung frei ist.

5. Vorrichtung (10) für den Transport einer Last auf Fahrzeugen gemäß einem beliebigen der vorhergehenden Patentansprüche, die **dadurch gekennzeichnet ist, dass** die Entriegelungsvorrichtung (23) ein manueller Antriebshebel ist, der sich am hinteren Teil der Vorrichtung (10) für den Transport einer Last befindet, die gegenüber der Anhängervorrichtung liegt, und mit dem freien Ende des Zahnes (24) durch ein Kabel verbunden ist, der dazu dient, den Zahn (24) in Richtung des internen Teils des beweglichen Rahmens (15) in Drehung zu versetzen und somit die Aufnahme (25a, 25b) zu befreien und die Bewegung des beweglichen Rahmens (15) nach außen zu ermöglichen, sodass er von der Anhängerkupplung entfernt wird.

6. Vorrichtung (10) für den Transport einer Last auf Fahrzeugen gemäß einem beliebigen der vorhergehenden Patentansprüche, die **dadurch gekennzeichnet ist, dass** sie außerdem Blockiervorrichtungen (26) der Drehung enthält, die dazu dienen, das Schwenken oder die Drehung des beweglichen Rahmens (15) zu verhindern, wenn er sich zwischen der Zwischenposition und der Position an der Anhängerkupplung befindet, und die dazu dienen, die Verschiebung des beweglichen Rahmens (15) in Richtung des Inneren zu verhindern, und d. h. in Richtung der Anhängerkupplung, wenn der bewegliche Rahmen (15) geneigt ist.

7. Vorrichtung (10) für den Transport einer Last auf Fahrzeugen gemäß Patentanspruch 6, die **dadurch gekennzeichnet ist, dass** die Blockiervorrichtungen (26) der Drehung aus einem Bügel (26) bestehen, der am beweglichen Rahmen (15) befestigt ist und aus diesem hervorsteht, sodass er den festen Rahmen (12) überlagert.

8. Vorrichtung (10) für den Transport einer Last auf Fahrzeugen gemäß einem beliebigen der vorhergehenden Patentansprüche, die **dadurch gekennzeichnet ist, dass** der bewegliche Rahmen (15) gleitend gegenüber dem festen Rahmen (12) auf Führungsvorrichtungen (27) montiert ist, die aus einer Gleitführung (28) bestehen, die auf der Seite des festen Rahmens (12) und aus einem Nut (29) bestehen, der am beweglichen Rahmen (15) erhalten wurde, die Führungsvorrichtungen (27) dienen dazu, den beweglichen Rahmen (15) in horizontaler Position zu halten und sein Umkippen im ersten Teil seiner Verschiebungsbewegung nach außen zu verhindern, wenn er sich von der Anhängerkupplung entfernt.

9. Vorrichtung (10) für den Transport einer Last auf Fahrzeugen gemäß Patentanspruch 8, die **dadurch gekennzeichnet ist, dass** die Führungsvorrichtungen (27) ein Ende (30) der Gleitführung (28) enthalten, die mit einer doppelten Konizität ausgestattet sind, die einen ersten Winkel (A) und einen zweiten Winkel (B) aufweisen, die die Spiele des beweglichen Rahmens (15) auf ein Mindestmaß reduzieren, wenn diese den letzten Teil ihres Schließlaufs erreicht.

10. Vorrichtung (10) für den Transport einer Last auf Fahrzeugen gemäß einem beliebigen der vorhergehenden Patentansprüche, die **dadurch gekennzeichnet ist, dass** sie außerdem einen Sperrknauf (31) enthält, der dazu dient, den beweglichen Rahmen (15) mit dem festen Rahmen (12) zu blockieren, wenn sich die Vorrichtung in der Betriebsposition befindet, die der Position an der Anhängerkupplung entspricht.

11. Vorrichtung (10) für den Transport einer Last auf Fahrzeugen gemäß einem beliebigen der vorhergehenden Patentansprüche, die **dadurch gekennzeichnet ist, dass** sie einen Schließhebel (32) der Vorrichtung (10) an der Anhängerkupplung enthält, die herausziehbar und ausbaubar mit dem Verbindungselement (11) an der Anhängerkupplung verbunden ist.

12. Vorrichtung (10) für den Transport einer Last auf Fahrzeugen gemäß einem beliebigen der vorhergehenden Patentansprüche, die **dadurch gekennzeichnet ist, dass** sie Befestigungsvorrichtungen (16) enthält, die Lasthalterungen enthält, die scharniert und/oder gleitend durch Führungen mit dem beweglichen Rahmen (15) verbunden sind, um eingestellt werden zu können, damit sie sich an die unterschiedlichen Lasttypen anpassen.

## Revendications

1. Dispositif (10) pour le transport d'une charge sur des véhicules automobiles comprenant :
- un élément de raccordement (11) pouvant être relié au dispositif d'attelage installé sur un véhicule automobile,
- un châssis fixe (12) relié à l'élément de raccordement (11),
- un châssis mobile (15), qui est monté et glisse sur le châssis fixe (12), où la charge sera fixée ;
- des premiers éléments de blocage (21) associés au châssis fixe (12) et au châssis mobile (15) qui sont aptes à bloquer la translation du châssis mobile (15) par rapport au châssis fixe (12) dans une position proche du dispositif d'attelage,
**caractérisé en ce que** l'on a prévu
- des seconds éléments de blocage (22) associé au châssis fixe (12) et au châssis mobile (15) qui sont aptes à bloquer la translation du châssis mobile (15) par rapport au châssis fixe (12) au moins dans une position intermédiaire entre la position proche du dispositif d'attelage, où les premiers éléments de blocage (21) bloquent la translation du châssis mobile (15) par rapport au châssis fixe (12), et une position finale, où le châssis mobile (15) est éloigné du dispositif d'attelage ; le châssis mobile (15) est apte à glisser sur le châssis fixe (12) entre la position proche du dispositif d'attelage et au moins une position intermédiaire ; il est également apte à s'incliner en tournant autour d'un axe de basculement (20) transversal à la direction de glissement du châssis mobile (15) sur le châssis fixe (12) après avoir dépassé au moins une position intermédiaire, par conséquent, les premiers éléments de blocage (21) et les seconds
éléments de blocage (22) sont aptes à empêcher la translation du châssis mobile (15) vers l'extérieur, en se déplaçant de la position proche du dispositif d'attelage vers une position intermédiaire, ou à partir de la dernière position intermédiaire vers la position finale, et ils sont aptes à laisser libre la translation vers le dispositif d'attelage, en particulier depuis la position finale vers la dernière position intermédiaire, ou depuis la position intermédiaire vers la position proche du dispositif d'attelage ; les premiers éléments de blocage (21) et les seconds éléments de blocage (22) sont composés chacun d'une dent (24) et d'un premier siège (25a) ou d'un second siège (25b) réalisés dans le châssis fixe (12) ; la dent (24) est fixée par une charnière à l'intérieur du châssis mobile (15) et elle est apte à s'engager dans les sièges (25a, 25b) pour bloquer le déplacement du châssis mobile (15).

2. Dispositif (10) pour le transport d'une charge sur des véhicules automobiles, selon la revendication 1, **caractérisé en ce que** les seconds éléments de blocage (22) sont aptes à bloquer la translation du châssis mobile (15) par rapport au châssis fixe (12) dans une pluralité de positions intermédiaires entre la position proche du dispositif d'attelage, où les premiers éléments de blocage (21) bloquent la translation du châssis mobile (15) par rapport au châssis fixe (12), et la position finale, où le châssis mobile (15) est éloigné du dispositif d'attelage ; le châssis mobile (15) est apte à glisser sur le châssis fixe (12) entre la position proche du dispositif d'attelage et les positions intermédiaires, mais aussi apte à s'incliner en tournant autour d'un axe de basculement (20) transversal par rapport à la direction de glissement du châssis mobile (15) sur le châssis fixe (12) après avoir dépassé la dernière position intermédiaire qui précède la position finale.

3. Dispositif (10) pour le transport d'une charge sur des véhicules automobiles, selon la revendication 1 ou 2, **caractérisé en ce qu'**il comprend aussi un dispositif de déblocage (23) relié aux premiers éléments de blocage (21) et aux seconds éléments de blocage (22) qui est en mesure de les débloquer pour libérer le châssis mobile (15) et lui permettre de glisser sur le châssis fixe (12).

4. Dispositif (10) pour le transport d'une charge sur des véhicules automobiles, selon la revendication 1, **caractérisé en ce que** la dent (24) est en forme de coin et qu'elle est apte à empêcher la translation du châssis mobile (15) vers l'extérieur, tandis que sa translation est libre vers le dispositif d'attelage.

5. Dispositif (10) pour le transport d'une charge sur des véhicules automobiles, selon l'une des revendications précédentes, **caractérisé en ce que** le dispositif de déblocage (23) est un levier à actionnement manuel qui se trouve à l'arrière du dispositif (10) pour le transport d'une charge qui est opposée au dispositif d'attelage, et qui est relié à l'extrémité libre de la dent (24) à travers un câble permettant de mettre en rotation la dent (24) vers la partie interne du châssis mobile (15), en libérant le siège (25a, 25b) et en permettant le mouvement du châssis mobile (15) vers l'extérieur, en l'éloignant du dispositif d'attelage.

6. Dispositif (10) pour le transport d'une charge sur des véhicules automobiles, selon l'une des revendications précédentes, **caractérisé en ce qu'**il comprend aussi des moyens de blocage (26) de la rotation aptes à empêcher le basculement ou la rotation du châssis mobile (15) quand il se trouve entre la position intermédiaire et la position proche du dispositif d'attelage, et qui permettent aussi d'empêcher la translation du châssis mobile (15) vers l'intérieur, à savoir vers le dispositif d'attelage quand le châssis mobile (15) est incliné.

7. Dispositif (10) pour le transport d'une charge sur des véhicules automobiles, selon la revendication 6, **caractérisé en ce que** les moyens de blocage (26) de la rotation sont composés d'un étrier (26) fixé au châssis mobile (15) et en saillie de sorte à être superposé au châssis fixe (12).

8. Dispositif (10) pour le transport d'une charge sur des véhicules automobiles, selon l'une des revendications précédentes, **caractérisé en ce que** le châssis mobile (15) glisse par rapport au châssis fixe (12) sur des moyens de guidage (27) constitués d'une glissière (28) fixée sur le côté du châssis fixe (12) et d'une rainure (29) creusée sur le châssis mobile (15) ; les moyens de guidage (27) sont aptes à maintenir en position horizontale le châssis mobile (15) et à empêcher le basculement dans la première partie de son mouvement de translation vers l'extérieur, quand il s'éloigne du dispositif d'attelage.

9. Dispositif (10) pour le transport d'une charge sur des véhicules automobiles, selon la revendication 8, **caractérisé en ce que** les moyens de guidage (27) comprennent une extrémité (30) de la glissière (28) dotée d'une double conicité qui présente un premier angle (A) et un second angle (B) qui réduisent au minimum les jeux du châssis mobile (15) quand ce dernier rejoint la dernière partie de sa course en fermeture.

10. Dispositif (10) pour le transport d'une charge sur des véhicules automobiles, selon l'une des revendications précédentes, **caractérisé en ce qu'**il comprend aussi un bouton de blocage (31) apte à bloquer le châssis mobile (15) avec le châssis fixe (12) quand le dispositif se trouve en position de marche qui correspond à la position proche du dispositif d'attelage.

11. Dispositif (10) pour le transport d'une charge sur des véhicules automobiles, selon l'une des revendications précédentes, **caractérisé en ce qu'**il comprend un levier de fermeture (32), relié au dispositif d'attelage, pouvant être extrait et démonté de l'élément de raccordement (11).

12. Dispositif (10) pour le transport d'une charge sur des véhicules automobiles, selon l'une des revendications précédentes, **caractérisé en ce qu'**il comprend des dispositifs de fixation (16) dotés de supports de la charge qui sont fixés par une charnière et/ou qui glissent sur des guides du châssis mobile (15) afin de pouvoir les régler pour les adapter à tous types de charge.
